# EUROPEAN PATENT SPECIFICATION

(11) **EP 2 451 322 B1**
(45) Date of publication and mention of the grant of the patent: **05.03.2014**
(21) Application number: 10725420.3
(22) Date of filing: 14.06.2010
(51) Int. Cl.: A47J 27/09

(54) **PRESSURE COOKER WITH ADDITIONAL SAFETY DEVICE AGAINST THE DANGER OF EXPLOSION DUE TO OVERPRESSURE**
SCHNELLKOCHTOPF MIT ZUSÄTZLICHER SICHERHEITSVORRICHTUNG ALS SCHUTZ VOR EXPLOSIONSGEFAHR INFOLGE VON ÜBERDRUCK
AUTOCUISEUR POURVU D'UN DISPOSITIF DE SÉCURITÉ SUPPLÉMENTAIRE CONTRE LE DANGER D'EXPLOSION DÛ À LA SURPRESSION

(30) Priority: 08.07.2009 IT MI20091209
(43) Date of publication of application: 16.05.2012
(73) Proprietor: Aracaria B.V., 1105 BH Amsterdam (NL)
(72) Inventor: LUKAC, Milan, I-20047 Brugherio (IT)
(74) Representative: Viering, Jentschura & Partner Patent- und Rechtsanwälte
(86) International application number: PCT/EP2010/058324
(87) International publication number: WO 2011/003698

(56) References cited:
- EP-A- 1 535 551
- DE-U1-202008 011 482
- FR-A- 2 796 542

## Description

### Technical Field

The present invention relates to a pressure cooker with an additional safety device against the danger of explosion due to overpressure.

### Background Art

Pressure cooking devices are known which allow to cook food at a pressure higher than atmospheric pressure. Such devices, commonly termed "pressure cookers", generally comprise a vessel which is open upward, such as a pot, saucepan or the like, a lid, which can engage the mouth of the vessel in order to close it, and an annular gasket, which is associated with the lower edge of the lid and can engage the inner lateral surface of the vessel proximate to its mouth in order to provide a steam-tight seal between the vessel and the lid.

A pressure cooking device of this type is illustrated, for example, in EP 568.531.

One of the main problems linked to the use of pressure cooking devices is obtaining an adequate safety against the danger of explosion due to overpressure that may occur because of an anomaly in operation.

In such types of cookers, in fact, cooking is regulated by means of a temperature indicator and a pressure controlling device on the lid that connects the inside of the vessel to the outside. Such device is constituted generally by a pin that can move with respect to the lid due to the pressure of the steam that develops inside the vessel during cooking, along a vertical direction, in contrast with the action of a spring. When the cooking pressure set by the manufacturer is reached, this pressure is able to open the device in contrast with the action of the spring, venting through said device located on the lid the steam, which provides the user with a visual signal that the preset pressure has been reached in order to induce him to reduce to minimum the heat source used for cooking.

In case of inadequate maintenance of this device before cooking, such as for example in case of inadequate or incorrect washing, the pin might be jammed.

In order to prevent the pressure inside the vessel from being able to increase progressively until it causes the explosion of the vessel, with serious risk for the safety of the user, such cookers are provided with a safety device, also located on the lid, which opens at a pressure that is higher than the opening pressure of the control device but anyway significantly lower than the explosion pressure of the vessel. The safety device, too, for reasons similar to those cited with reference to the control device, might not open, with the risk of causing the explosion of the vessel.

It should be noted that the control device and the safety device can become clogged during use because they are composed of many small components and because they force the outgoing steam to pass through very small holes. Such devices have to be cleaned thoroughly before every use, but due to their geometric shape cleaning by the user might not always be effective, leaving some steam passage ducts obstructed.

EP 1 535 551 A discloses a pressure cooker having a vessel, a lid and a gasket. DE 20 2008 011482 U1 discloses a further pressure cooker.

### Disclosure of the Invention

The aim of the present invention is to solve the problem cited above, by providing a pressure cooker with additional safety device that offers adequate assurances against the danger of explosion due to overpressure.

Within this aim, an object of the invention is to provide a cooker that gives adequate assurances of safety against the risk of accidental explosion even without requiring particular attention by the user in cooker maintenance operations.

Another object of the invention is to provide a cooker that is simple to use.

Another object of the invention is to provide a cooker that can be manufactured with competitive costs.

This aim and these and other objects that will become better apparent hereinafter are achieved by a pressure cooker with additional safety device against the danger of explosion due to overpressure, comprising the features of claims 1, as well as by a safety device having the features of claim 9. Further embodiments of the invention are described in the dependent claims.

### Brief description of the drawings

Further characteristics and advantages of the invention will become better apparent from the description of a preferred but not exclusive embodiment of the cooker according to the invention, illustrated by way of non-limiting example in the accompanying drawings, wherein:
Figure 1 is a side elevation view of the cooker according to the invention;
Figure 2 is a sectional view, taken along the line II-II of Figure 1;
Figure 3 is an enlarged-scale view of a detail of Figure 2;
Figure 4 is an enlarged-scale view of another detail of Figure 2, related to the deformable portion of the gasket in the sealing position;
Figure 5 is a view of the same detail of Figure 4 with the deformable portion of the gasket in the venting position;
Figure 6 is a top plan view of the gasket of the cooker according to the invention;
Figure 7 is a side elevation view of the gasket of the cooker according to the invention;
Figure 8 is a sectional view, taken along the line VIII-VIII of Figure 6.

### Ways of carrying out of the Invention

With reference to the figures, the cooker according to the invention, generally designated by the reference numeral 1, comprises a vessel 2, for example of the type of a pot, saucepan, frying pan or the like, which is open upward, a lid 3 which can engage the mouth 7 of the vessel 2 in order to close it, and an annular gasket 4, which is associated with the lid 3 and can engage the inner lateral surface 2a of the vessel 2 in order to provide the steam-tight seal between the vessel 2 and the lid 3.

According to the invention, the gasket 4 has at least one portion 5 that can be deformed due to the pressure that acts on its side directed toward the inside of the vessel 2 in order to pass from a sealing position, in which it is engaged hermetically with the inner lateral surface 2a of the vessel 2 and with the lid 3, to a venting position, in which it is disengaged from the inner lateral surface 2a of the vessel 2, in order to allow the outward venting of steam when a preset pressure is exceeded inside the vessel 2.

In practice, the cooker according to the invention has an additional safety device, which is constituted by the gasket 4 proper, which has at least one portion 5 that is deformable, when a preset pressure is reached inside the vessel 2, in order to allow the outward venting of the steam and thus avoid, with a high level of safety, the danger of an explosion of the cooker, as will become apparent hereinafter.

In the illustrated embodiment there are three deformable portions 5, which are mutually angularly spaced in a regular manner around the axis 4a of the gasket 4, but the number of the deformable portions 5 may vary according to the requirements. The presence of a plurality of deformable portions 5 increases safety against the explosion of the cooker, because the failed or insufficient deformation of one of such deformable portions 5 can be compensated by the deformation of the other deformable portions 5.

In the illustrated embodiment, the vessel 2 has a circular plan shape, and thus the gasket 4 correspondingly has an annular circular plan shape, but the concept on which the invention is based may be adopted also for vessels and thus for gaskets having another shape, such as for example with an oval or elliptical plan shape.

Preferably, the gasket 4 is connected to a lower edge 6 of the lid 3 and can be inserted at least partially through the mouth 7 of the vessel 2 so as to engage, by means of its deformable portion 5 or its deformable portions 5, the inner lateral surface 2a of the vessel 2. Each deformable portion 5 of the gasket 4 can engage the inner lateral surface 2a of the vessel 2 in normal conditions of operation and disengages from the inner lateral surface 2a of the vessel 2 when the pressure inside the vessel 2 reaches a preset value.

Conveniently, each deformable portion 5 of the gasket 4 is elastically deformable in order to pass from the sealing position to the venting position or vice versa.

Each deformable portion 5 is shaped preferably like a lip and can flex from the inside of the vessel 2 toward the mouth 7 of the vessel 2 in order to pass from the sealing position to the venting position or vice versa.

The gasket 4 has a substantially frustum-like internally hollow shape, which is open at its end faces. The gasket 4, when the lid 3 is arranged so as to close the mouth 7 of the vessel 2, is placed so that its larger end face is directed toward the bottom 8 of the vessel 2. Each one of the deformable portions 5 is defined between a recess 9 on the outer lateral surface of the gasket 4 and the larger end face of the gasket 4.

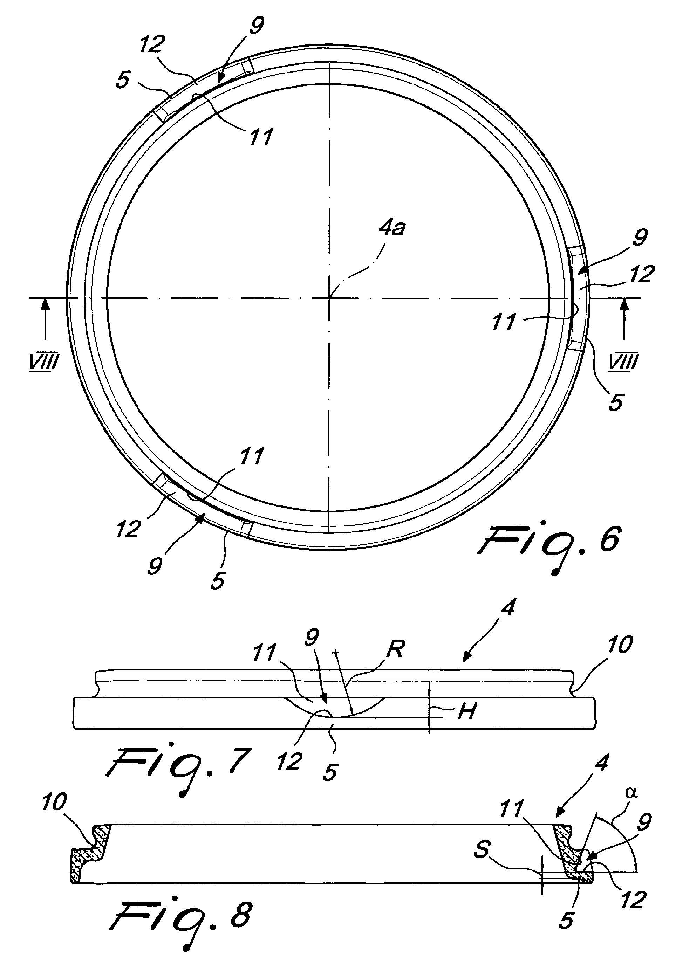

More particularly, on the outer lateral surface of the gasket 4, in an intermediate region, there is a groove 10 which has a circumferential extension and in which the lower edge 6 of the lid 3 engages. Each recess 9 that defines one of the deformable portions 5 extends from the side of this groove 10 toward the larger end face of the gasket 4 and is arranged between the groove 10 and the larger end face of the gasket. Each recess 9 is preferably crescent-shaped with a radius of curvature R, as shown in particular in Figure 7.

Each recess 9 is delimited by a side wall 11, which is designed to be directed toward the inner lateral surface 2a of the vessel 2, and by an end wall 12, which constitutes the side of the corresponding deformable portion 5 that is designed to be directed toward the mouth 7 of the vessel 2, i.e., toward the opposite side with respect to the bottom 8 of the vessel 2. The side wall 11 is inclined with respect to the end wall 12 at an angle α that defines the angle of maximum flexing of the corresponding deformable portion 5 in passing from the sealing position to the venting position.

The geometry of the deformable portions 5 of the gasket 4 is completed by the height H, which constitutes the dimension of each recess 9 measured parallel to the axis of the gasket 4, and by the thickness S of each one of the deformable portions 5 at the flexing region.

The radius R and the height H allow to set, during the design phase, the desired value of the pressure that produces the transition from the sealing position to the venting position of the corresponding deformable portion 5, in addition to ensuring the seal on the lid 3 and thus the hermetic seal, while the thickness S allows the desired flexing of the corresponding deformable portion 5.

During the design phase, by varying the breadth of the angle α it is possible to vary the breadth of the passage for the steam that is created between the inner lateral surface 2a of the vessel 2 and the corresponding deformable portion 5 of the gasket 4 and thus vary precisely the quantity of steam that exits between the gasket 4 and the inner lateral surface 2a of the vessel 2, preventing an excessive discharge of steam that might be dangerous for the user or a discharge that is insufficient to avoid the increase in pressure inside the vessel 2.

Other parameters on which is possible to intervene during the design phase in order to obtain optimum operation of the gasket 4 for its function of additional safety device are the type and the hardness of the material used for its production.

Preferably, the gasket 4 is provided so that the transition of its deformable portion 5 or of its deformable portions 5 from the sealing position to the venting position occurs with a relative pressure inside the vessel 2 that is comprised between 1.9 bar (190 kPa) and 3 bar (300 kPa).

The cooker according to the invention is provided, in a per se known manner, with a pressure control device that stabilizes the pressure inside the cooker during use and has a visual and/or acoustic pressure indicator adapted to report to the user that the internal pressure has reached the control value and, mandatorily, with a safety device that prevents the inside pressure from exceeding the safety value. Such devices, of a known type, are arranged on the lid 3 and are not described further for the sake of simplicity.

In the illustrated embodiment, the cooker according to the invention is provided with a system for engagement between the lid 3 and the vessel 2 of a known type which is similar to a system disclosed in EP 568.531, based on manual or automatic engagement of portions 15 of the lid 3 with the flanged upper edge 16 of the vessel 2, by way of the rotation of each one of said portions 15 of the lid 3 around an axis 17 that is parallel to a line that is tangent to the perimeter of the flanged edge 16 or parallel to the side of the flanged edge 16; however, the engagement system between the lid 3 and the vessel 2 can be different, except for the coupling of the gasket 4 with the inner lateral surface 2a of the vessel 2.

Operation of the cooker according to the invention is as follows.

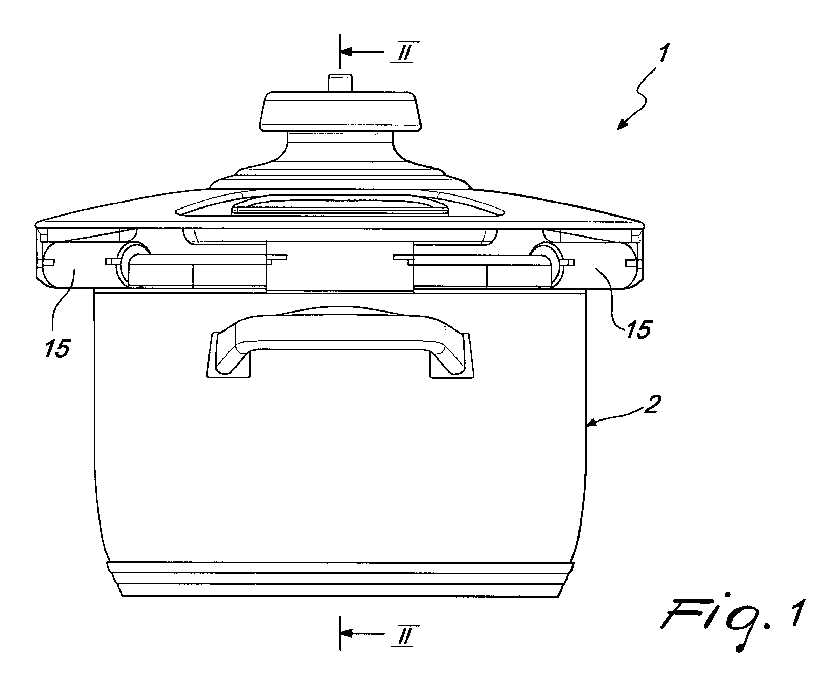

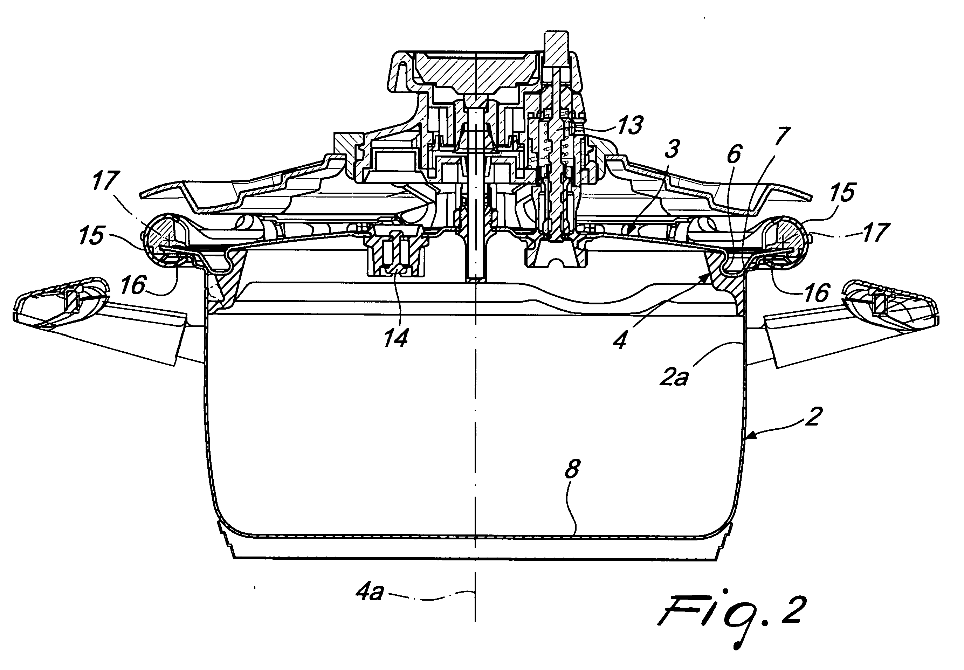

The cooker, with the lid 3 engaged correctly with the vessel 2, that contains the food to be cooked with an adequate quantity of liquid, has the appearance shown in Figures 1, 2, 3 and 4.

In this condition, the gasket 4 is engaged hermetically, along all of its circumferential extension, with the inner lateral surface 2a of the vessel 2.

By exposing the cooker to the heating action of a heat source, the temperature inside the vessel 2 increases, and so does the pressure due to the progressive increase of the generated steam.

When the pressure inside the vessel 2 reaches the preset cooking pressure, the control device 13, if it operates correctly, opens and provides the user with a visual and acoustic signal that the preset pressure has been reached in order to induce him to reduce to the minimum value the heat source used for cooking.

If the control device 13 failed to open, the pressure inside the vessel 2 would continue to increase until it reached the opening pressure of the safety device 14, which by opening performs its function of preventing the pressure from being able to continue to rise.

If the safety device 14 failed to open, the pressure inside the vessel 2 would increase until it reached the preset pressure that is sufficient to produce the deformation of the deformable portion 5 or deformable portions 5 of the gasket 4.

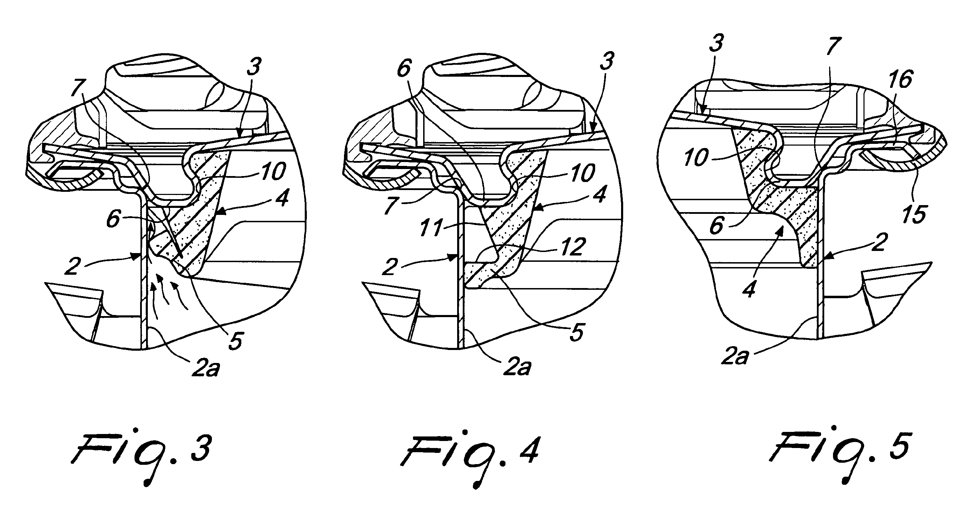

The deformable portion 5 or deformable portions 5 of the gasket 4, by deforming, pass from the sealing position to the venting position, as shown in Figure 5, separating from the inner lateral surface 2a of the vessel 2 and thus generating one or more openings through which the steam vents from the cooker, preventing the pressure inside the vessel 2 from being able to reach dangerous levels.

In practice it has been found that the pressure cooker according to the invention fully achieves the intended aim and objects, since the additional safety device, constituted by the gasket with one or more deformable portions in order to allow the outward venting of the steam in case of operating anomalies, provides adequate assurances against the danger of explosion due to overpressure without requiring particular user care in the operations for maintenance of the cooker.

Another advantage of the additional safety device constituted by the gasket of the cooker according to the invention is that it is simple to wash.

The invention thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

The disclosures in Italian Patent Application No. MI2009A001209 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A pressure cooker (1) with additional safety device against the danger of explosion due to overpressure, comprising a vessel (2) which is open upward, a lid (3) which can engage the mouth (7) of the vessel (2) in order to close it, and an annular gasket (4) which is associated with said lid (3) and can engage the inner lateral surface (2a) of said vessel (2) in order to provide a steam-tight seal between the vessel (2) and the lid (3), said gasket (4) having at least one portion (5) that can be deformed due to the pressure that acts on its side directed toward the inside of said vessel (2) in order to pass from a sealing position, in which it is engaged hermetically with the inner lateral surface (2a) of said vessel (2) and with said lid (3), to a venting position, in which it is disengaged from the inner lateral surface (2a) of said vessel (2), in order to allow the outward venting of steam when a preset pressure is exceeded inside said vessel (2), **characterized in that** said gasket (4) has a substantially frustum-like internally hollow shape which is open at its ends, said gasket (4) being designed to be directed with its larger end face toward the bottom (8) of the vessel (2) and said at least one deformable portion (5) being defined between a recess (9) on the outer lateral surface of the gasket (4) and the larger end face of the gasket (4).

2. The cooker according to claim 1, **characterized in that** said gasket (4) is connected to a lower edge (6) of said lid (3) and can be inserted at least partially through the mouth (7) of the vessel (2) in order to engage, by means of said at least one deformable portion (5), the inner lateral surface (2a) of the vessel (2).

3. The cooker according to claim 1, **characterized in that** said at least one deformable portion (5) of said gasket (4) is elastically deformable in order to pass from said sealing position to said venting position and vice versa.

4. The cooker according to one or more of the preceding claims, **characterized in that** said at least one deformable portion (5) of said gasket (4) is shaped like a lip and is flexible from the inside of the vessel (2) toward the mouth (7) of the vessel (2) in order to pass from said sealing position to said venting position.

5. The cooker according to one or more of the preceding claims, **characterized in that** said recess (9) is delimited by a side wall (11) that is designed to be directed toward the inner lateral surface (2a) of the vessel (2) and by an end wall (12), which constitutes the side of said at least one deformable portion (5) that is designed to be directed toward the mouth (7) of the vessel (2), said side wall (11) being inclined with respect to said end wall (12) at an angle (α) that defines the angle of maximum flexing of said deformable portion in passing from said sealing position to said venting position.

6. The cooker according to one or more of the preceding claims, **characterized in that** said gasket (4) has, on its lateral surface, an engagement groove (10) for the lower edge (6) of said lid (3), said recess (9) being arranged between said groove (10) and the larger end face of the gasket (4).

7. The cooker according to one or more of the preceding claims, **characterized in that** said gasket (4) has at least two portions (5) that are deformable due to the pressure that acts on its side that is directed toward the inside of the vessel (2) in order to pass from said sealing position to said venting position, said at least two deformable portions (5) being mutually angularly spaced around the axis of the gasket (4).

8. The cooker according to one or more of the preceding claims, **characterized in that** a control device (13) and a safety device (14) for the connection of the inside of the vessel (2) to the outside are applied to said lid (3), said safety device (14) having an opening pressure that exceeds the opening pressure of said control device (13), said preset pressure for the transition of said at least one deformable portion (5) of the gasket (4) from said sealing position to said venting position being higher than the opening pressure of said safety device (14).

9. An additional safety device for pressure cookers (1) of the type comprising a vessel (2) which is open upward and a lid (3) which can engage the mouth (7) of the vessel (2) in order to close it, the additional safety device comprising an annular gasket (4) being adapted to be associated with said lid (3) and to engage the inner lateral surface (2a) of the vessel (2) in order to provide a steam-tight seal between the vessel (2) and the lid (3), said gasket (4) having at least one portion (5) that is adapted to be deformed due to the pressure that acts on its side directed toward the inside of said vessel (2) in order to pass from a sealing position, in which it is engaged hermetically with the inner lateral surface (2a) of said vessel (2) and with said lid (3), to a venting position, in which it is disengaged from the inner lateral surface (2a) of said vessel (2), in order to allow the outward venting of steam when a preset pressure is exceeded inside said vessel (2), **characterized in that** said gasket (4) has a substantially frustum-like internally hollow shape which is open at its ends, said gasket (4) being designed to be directed with its larger end face toward the bottom (8) of the vessel (2) and said at least one deformable portion (5) being defined between a recess (9) on the outer lateral surface of the gasket (4) and the larger end face of the gasket (4).

## Patentansprüche

1. Ein Schnellkochtopf (1) mit einer zusätzlichen Sicherheitsvorrichtung gegen die Gefahr einer Explosion aufgrund von Überdruck, aufweisend ein Gefäß (2), das nach oben hin offen ist, einen Deckel (3), der mit der Öffnung (7) des Gefäßes (2) in Eingriff sein kann, um es zu verschließen, und eine ringförmige Dichtung (4), die mit dem Deckel (3) verbunden ist und mit der inneren Seitenfläche (2a) des Gefäßes (2) in Eingriff sein kann, um eine dampfdichte Abdichtung zwischen dem Gefäß (2) und dem Deckel (3) bereitzustellen, wobei die Dichtung (4) mindestens einen Abschnitt (5) aufweist, der aufgrund des Drucks verformbar ist, der auf ihre Seite einwirkt, die in Richtung zu dem Inneren des Gefäßes (2) gerichtet ist, um aus einer Dichtungsposition, in der sie hermetisch mit der inneren Seitenfläche (2a) des Gefäßes (2) und mit dem Deckel (3) in Eingriff ist, in eine Entlüftungsposition zu übergehen, in der sie von der inneren Seitenfläche (2a) des Gefäßes (2) gelöst ist, um das Ablassen von Dampf nach außen zuzulassen, wenn ein vorbestimmter Druck innerhalb des Gefäßes (2) überschritten wird, **dadurch gekennzeichnet, dass** die Dichtung (4) eine im Wesentlichen kegelstumpfartige innen hohle Form hat, die an ihren Enden offen ist, wobei die Dichtung (4) ausgelegt ist, um mit ihrer größeren Endseite zu dem Boden (8) des Gefäßes (2) hin ausgerichtet zu sein, und der mindestens eine verformbare Abschnitt (5) zwischen einer Aussparung (9) an der äußeren Seitenfläche der Dichtung (4) und der größeren Endseite der Dichtung (4) definiert ist.

2. Der Kochtopf gemäß Anspruch 1, **dadurch gekennzeichnet, dass** die Dichtung (4) mit einem unteren Rand (6) des Deckels (3) verbunden ist und zumindest teilweise durch die Öffnung (7) des Gefäßes (2) hindurch einsetzbar ist, um mittels des mindestens einen verformbaren Abschnitts (5) mit der inneren Seitenfläche (2a) des Gefäßes (2) in Eingriff zu gelangen.

3. Der Kochtopf gemäß Anspruch 1, **dadurch gekennzeichnet, dass** der mindestens eine verformbare Abschnitt (5) der Dichtung (4) elastisch verformbar ist, um aus der Dichtungsposition in die Entlüftungsposition und umgekehrt zu übergehen.

4. Der Kochtopf gemäß einem oder mehreren der vorhergehenden Ansprüche, **dadurch gekennzeichnet, dass** der mindestens eine verformbare Abschnitt (5) der Dichtung (4) wie eine Lippe geformt ist und vom Inneren des Gefäßes (2) zu der Öffnung (7) des Gefäßes (2) hin flexibel ist, um aus der Dichtungsposition in die Entlüftungsposition zu übergehen.

5. Der Kochtopf gemäß einem oder mehreren der vorhergehenden Ansprüche, **dadurch gekennzeichnet, dass** die Aussparung (9) begrenzt ist durch eine Seitenwand (11), die ausgelegt ist, um zu der inneren Seitenfläche (2a) des Gefäßes (2) hin ausgerichtet zu sein, und durch eine Endwand (12), die die Seite des mindestens einen verformbaren Abschnitts (5) ausbildet, die ausgelegt ist, um zu der Öffnung (7) des Gefäßes (2) hin ausgerichtet zu sein, wobei die Seitenwand (11) bezüglich der Endwand (12) in einem Winkel (α) geneigt ist, der den maximalen Biegewinkel des verformbaren Abschnitts beim Übergang aus der Dichtungsposition in die Entlüftungsposition definiert.

6. Der Kochtopf gemäß einem oder mehreren der vorhergehenden Ansprüche, **dadurch gekennzeichnet, dass** die Dichtung (4) an ihrer seitlichen Fläche eine Eingriffsnut (10) für den unteren Rand (6) des Deckels (3) hat, wobei die Aussparung (9) zwischen der Nut (10) und der größeren Endseite der Dichtung (4) angeordnet ist.

7. Der Kochtopf gemäß einem oder mehreren der vorhergehenden Ansprüche, **dadurch gekennzeichnet, dass** die Dichtung (4) mindestens zwei Abschnitte (5) hat, die aufgrund des Drucks, der auf ihre Seite einwirkt, die in Richtung zu der Innenseite des Gefäßes (2) gerichtet ist, verformbar sind, um aus der Dichtungsposition in die Entlüftungsposition zu übergehen, wobei die mindestens zwei verformbaren Abschnitte (5) in einem gegenseitigen Winkelabstand um die Achse der Dichtung (4) herum angeordnet sind.

8. Der Kochtopf gemäß einem oder mehreren der vorhergehenden Ansprüche, **dadurch gekennzeichnet, dass** eine Steuervorrichtung (13) und eine Sicherheitsvorrichtung (14) für die Verbindung des Inneren des Gefäßes (2) mit dem Äußeren auf den Deckel (3) angewandt sind, wobei die Sicherheitsvorrichtung (14) einen Öffnungsdruck hat, der den Öffnungsdruck der Steuervorrichtung (13) übersteigt, wobei der voreingestellte Druck für den Übergang des mindestens einen verformbaren Abschnitts (5) der Dichtung (4) aus der Dichtungsposition in die Entlüftungsposition höher als der Öffnungsdruck der Sicherheitsvorrichtung (14) ist.

9. Eine zusätzliche Sicherheitsvorrichtung für Schnellkochtöpfe (1) des Typs, der ein Gefäß (2), das nach oben hin offen ist, und einen Deckel (3) aufweist, der mit der Öffnung (7) des Gefäßes (2) in Eingriff sein kann, um es zu schließen, wobei die zusätzliche Sicherheitsvorrichtung aufweist: eine ringförmige Dichtung (4), die angepasst ist, um mit dem Deckel (3) verbunden zu sein und mit der inneren Seitenfläche (2a) des Gefäßes (2) in Eingriff zu sein, um eine dampfdichte Abdichtung zwischen dem Gefäß (2) und dem Deckel (3) bereitzustellen, wobei die Dichtung (4) mindestens einen Abschnitt (5) aufweist, der angepasst ist, um sich aufgrund des Drucks, der auf ihre Seite einwirkt, die zu dem Inneren des Gefäßes (2) hin ausgerichtet ist, zu verformen, um aus einer Dichtungsposition, in der sie hermetisch mit der inneren Seitenfläche (2a) des Gefäßes (2) und mit dem Deckel (3) in Eingriff ist, in eine Entlüftungsposition zu übergehen, in der sie von der inneren Seitenfläche (2a) des Gefäßes (2) gelöst ist, um das Ablassen von Dampf nach außen zuzulassen, wenn ein vorbestimmter Druck innerhalb des Gefäßes (2) überschritten wird, **dadurch gekennzeichnet, dass** die Dichtung (4) eine im Wesentlichen kegelstumpfartige innen hohle Form hat, die an ihren Enden offen ist, wobei die Dichtung (4) ausgelegt ist, um mit ihrer größeren Endseite zu dem Boden (8) des Gefäßes (2) hin ausgerichtet zu sein, und der mindestens eine verformbare Abschnitt (5) zwischen einer Aussparung (9) an der äußeren Seitenfläche der Dichtung (4) und der größeren Endseite der Dichtung (4) definiert ist.

## Revendications

1. Un autocuiseur (1) avec un dispositif de sécurité supplémentaire contre le danger d'explosion dû à la surpression, comprenant un récipient (2) qui est ouvert vers le haut, un couvercle (3) qui peut se mettre en prise de l'ouverture (7) du récipient (2) pour la fermer, et un joint (4) annulaire qui est associé audit couvercle (3) et peut se mettre en prise de la surface latérale intérieure (2a) dudit récipient (2) afin de prévoir un joint étanche à la vapeur entre le récipient (2) et le couvercle (3), ledit joint (4) ayant au moins une partie (5) qui peut être déformée dû à la pression qui agit sur sa face orientée vers l'intérieur dudit récipient (2) afin de passer d'une position étanche, dans laquelle il est en prise hermétique de la surface latérale intérieure (2a) dudit récipient (2) et dudit couvercle (3), vers une position de ventilation, dans laquelle il est détaché de la surface latérale intérieure (2a) dudit récipient (2), afin de permettre la ventilation de vapeur vers l'extérieur lors qu'une pression prédéterminée est excédée à l'intérieur dudit récipient (2), **caractérisé en ce que** ledit joint (4) a une forme essentiellement tronconique et creuse à l'intérieur qui est ouverte à ses extrémités, ledit joint (4) étant conçu pour être orienté avec sa surface terminale plus grande vers le fond (8) du récipient (2), et ladite au moins une partie déformable (5) étant définie entre un évidement (9) sur la surface latérale extérieure du joint (4) et la surface terminale plus grande du joint (4).

2. Le cuiseur selon la revendication 1, **caractérisé en ce que** ledit joint (4) est relié avec un bord inférieure (6) dudit couvercle (3) et peut être inséré au moins en partie à travers l'ouverture (7) du récipient (2) afin d'être mis en prise de la surface latérale intérieure (2a) du récipient (2) au moyen de ladite au moins une partie déformable (5).

3. Le cuiseur selon la revendication 1, **caractérisé en ce que** ladite au moins une partie déformable (5) dudit joint (4) est déformable élastiquement afin de passer de ladite position étanche vers ladite position de ventilation et vice versa.

4. Le cuiseur selon une ou plusieurs des revendications précédentes, **caractérisé en ce que** ladite au moins une partie déformable (5) dudit joint (4) a la forme d'une lèvre et est flexible à partir de l'intérieur du récipient (2) vers l'ouverture (7) du récipient (2), afin de passer de ladite position étanche vers ladite position de ventilation.

5. Le cuiseur selon une ou plusieurs des revendications précédentes, **caractérisé en ce que** ledit évidement (9) est limité par une paroi latérale (11) qui est conçue pour être orientée vers la surface latérale intérieure (2a) du récipient (2) et par une paroi terminale (12) constituant la face de ladite au moins une partie déformable (5) qui est conçue pour être orientée vers l'ouverture (7) du récipient (2), ladite paroi (11) étant inclinée par rapport à ladite paroi terminale (12) à un angle (α) qui définit l'angle de flexion maximale de ladite partie déformable en passant de ladite position étanche vers ladite position de ventilation.

6. Le cuiseur selon une ou plusieurs des revendications précédentes, **caractérisé en ce que** ledit joint (4) a, sur sa surface latérale, une rainure de prise (10) pour le bord inférieur (6) dudit couvercle (3), ledit évidement (9) étant disposé entre ladite rainure (10) et la surface terminale plus grande du joint (4).

7. Le cuiseur selon une ou plusieurs des revendications précédentes, **caractérisé en ce que** ledit joint (4) a au moins deux parties (5) qui sont déformables dû à la pression qui agit sur sa face orientée vers l'intérieur du récipient (2) afin de passer de ladite position étanche vers ladite position de ventilation, lesdites au moins deux parties déformables (5) étant mutuellement espacées angulairement autour de l'axe du joint (4).

8. Le cuiseur selon une ou plusieurs des revendications précédentes, **caractérisé en ce qu'**un dispositif de contrôle (13) et un dispositif de sécurité (14) pour la connexion de l'intérieur du récipient (2) à l'extérieur sont appliqués audit couvercle (3), ledit dispositif de sécurité (14) ayant une pression d'ouverture excédant la pression d'ouverture dudit dispositif de contrôle (13), ladite pression prédéterminée pour le passage de ladite au moins une partie déformable (5) du joint (4) de ladite position étanche vers ladite position de ventilation étant plus grande que la pression d'ouverture dudit dispositif de sécurité (14).

9. Un dispositif de sécurité supplémentaire pour les autocuiseurs (1) du type comprenant un récipient (2) qui est ouvert vers le haut et un couvercle (3) qui peut se mettre en prise de l'ouverture (7) du récipient (2) pour la fermer, le dispositif de sécurité supplémentaire comprenant un joint annulaire (4) étant adapté pour être associé audit couvercle (3) et pour se mettre en prise de la surface latérale intérieure (2a) du récipient (2) afin de prévoir un joint étanche à la vapeur entre le récipient (2) et le couvercle (3), ledit joint (4) ayant au moins une partie (5) adaptée pour être déformée dû à la pression qui agit sur sa face orientée vers l'intérieur dudit récipient (2), afin de passer d'une position étanche, dans laquelle il est en prise hermétique de la surface latérale intérieure (2a) dudit récipient (2) et dudit couvercle (3), vers une position de ventilation, dans laquelle il est détaché de la surface latérale intérieure (2a) dudit récipient (2), afin de permettre la ventilation de vapeur vers l'extérieur lors qu'une pression prédéterminée est excédée à l'intérieur dudit récipient (2), **caractérisé en ce que** ledit joint (4) a une forme essentiellement tronconique et creuse à l'intérieur qui est ouverte à ses extrémités, ledit joint (4) étant conçu pour être orienté avec sa surface terminale plus grande vers le fond (8) du récipient (2), et ladite au moins une partie déformable (5) étant définie entre un évidement (9) sur la surface latérale extérieure du joint (4) et la surface terminale plus grande du joint (4).
